# EUROPEAN PATENT APPLICATION

(11) **EP 2 407 826 A1**
(43) Date of publication of application: **18.01.2012**
(21) Application number: 10168816.6
(22) Date of filing: 08.07.2010
(51) Int. Cl.: G03B 21/20, H04N 5/74, H04N 9/31

(54) **Projection system comprising a solid state light source and a luminescent material.**

(71) Applicant: Koninklijke Philips Electronics N.V., 5621 BA Eindhoven (NL)
(72) Inventor: Aksenov, Yuri, 5600 AE, Eindhoven (NL)
(74) Representative: Damen, Daniel Martijn

(57) **Abstract**

The invention provides a projection system (100) comprising a projection light source (110) and a color wheel (120), wherein the projection light source (110) comprises a solid state light source (115), configured to generate a solid state light source beam (111) having a solid state light source beam cross-section. Upstream of the color wheel (120) beam shaping optics (161) are arranged, configured to shape the solid state light source beam cross-section into a rectangular cross-section. The color wheel (120) comprises a luminescent material (170), excitable by the solid state light source beam (111) and configured to generate, upon excitation by the solid state light source beam (111), visible light (116) for projection on an image panel (290).

## Description

### FIELD OF THE INVENTION

The invention relates to a digital projection system, such as a DLP-based projection system or a 3LCD-based projection system.

### BACKGROUND OF THE INVENTION

Projection systems are known for a long time, and there is still a desire to improve such projection systems.

US2005174544 for instance describes a light source for an image projection system comprising one or more LEDs packaged for high temperature operation. Advantageously, the LED dies are disposed on a package comprising a ceramic coated metal base including one or more underlying thermal connection pads, and underlying electrical connection pads, each LED die thermally coupled through the metal base to a thermal connection pad and electrically coupled to electrical connection pads. The LED can be mounted directly on the metal of the base or on a thin coating of electrical insulator on the metal. Arrays of LED dies thus packaged are advantageously fabricated by the low temperature co-fired ceramic-on-metal technique (LTTC-M) and can be referred to as LTTC-M packaged arrays. The LEDs are advantageously mounted in an array of cavities having tapered sides to reflect light from the LEDs. The high temperature LED light sources can substitute for HID lamps in a variety of front and rear projection systems and displays. They are particularly useful for rear projection systems.

US2010053565 describes a laser illuminating device and an image display device that enable to remove speckle noises in a diffraction field and an image field. A laser illuminating device includes a laser light source, a first lens including a plurality of micro lenses each having a predetermined numerical aperture in an in-plane direction, each of the micro lenses being adapted to expand laser light emitted from the laser light source to thereby superimpose the laser light transmitted through each of the micro lenses, and a second lens having an effective diameter larger than an effective diameter of the first lens, and for compensating for a divergence angle of the laser light expanded by each of the plurality of the micro lenses.

US2009067459 describes an illumination light source provided with a laser light source having a laser medium with a specified gain region, and a reflector having a narrow band reflection characteristic. A part of a laser light emitted from the laser light source is reflected and fed back by the reflector, so that an oscillation wavelength of the laser light source is fixed at a reflection wavelength. A peak of the gain region of the laser medium is shifted from the reflection wavelength by a change of an oscillation characteristic of the laser light source, so that the oscillation wavelength of the laser light source is changed from the reflection wavelength. Thus, an oscillation spectrum of the laser light source is spread to reduce speckle noise.

For projection systems, two types of image panels are especially relevant, the DLP (Digital Light Processing) type image panel and the (3)LCD type image panel, see for instance also US2006279858 and US5122870A.

### SUMMARY OF THE INVENTION

Information projection industry continues to grow and expand. Innovative light sources providing added utility to end users are among others primary focuses of industry parties. Worldwide global drive towards eco-friendly lighting solutions pushes ever harder solid state light technology for replacement of gas discharge lamps. The digital projection industry has an exemption from global bans on Hg containing light sources, since no feasible alternatives exist at this moment.

Widely pushed LED technologies may not suit high brightness requirements even as they are more efficient. The perspectives for LED based technologies for projection are also not of much hope.

Laser technologies are also considered, but costs and safety issues may still be a problem for consumer projection. Nevertheless, full Laser based projection might become available in 2-3 years if those issues are solved.

A feasible alternative, called Hybrid source, might be a solution. Such hybrid source is composed of a laser, a laser pumped luminescent material and a LED source. While such configuration may be less ideal it might trigger innovations and applications in coming years by using laser pumped luminescent sources. Since laser pumped luminescent material materials can be much more efficient for projection needs than LED's, such solution may also have no safety issues associated with direct laser beam and may be rather cheap compare to full laser (RGB) solution.

Luminescent solid state light sources can be found widely in luminaries using LED's. Most common configuration for such a slight source is: blue light emitting diode (LED) coated with luminescent material (luminescent material) in form of a powder or a ceramic micro-plate. Such a "luminescent material" may convert absorbed blue light into other visible color (red, green, yellow or white) depending on its chemical composition. These materials can also emit RGB color needed for projection when excited (pumped) by UV/ blue diode lasers. Those lasers are widely available at small cost for blue-ray data storage devices.

One of the major parameters in digital projection applications is the brightness and compactness of light source, which consequently lead to the higher values in an application. OEM (original equipment manufacturer) and light source manufacturers seeking the ways to boost the brightness, while preserving other characteristics such as life-time, energy consumption, costs, reliability and compactness of a system. Energy efficiency is a major parameter of light source. Specifics of projection applications requires light source having small etendue, which is the product of light source volume size and emitting angle.

The smaller the etendue of the source the more efficiently it can be used in projection application. LED light sources intrinsically have very large etendues; that is why they hardly can be used for projection. Laser sources have infinitely small etendue and are the best sources for projection. Laser pump luminescent materials (luminescent material ceramics) could be very suitable compromised solution. Laser itself has very small etendue and can be focused into a tiny spots or shaped in desired form without significant light losses. However, when laser strikes the luminescent material surface the luminescent material surface may scatter the light like a Lambertian scatterer. Obtained in such a way, the scatterer has finite etendue which could be rather large. From the etendue definition above and taking to account the luminescent material angular emission property it becomes clear that etendue can be reduced by reducing (more focusing) laser spot size on the luminescent material.

Doing so an increase in energy density in the spot will be attained, too. In order to reach 2000 Lm brightness on screen, which is the value for main stream projection products, power to be focused on the luminescent material may be~15W. Recent analysis of some beamers on the market shows that using 24W laser substantially no luminescent material can handle such a power focused in the needed spot size. A luminescent material color wheel (PCW) may be a solution. Such configuration allows distribution of power loads of significantly larger luminescent material surface, while keeping laser spot small. An example can be found in WO2007141688.

The use of PCW in single DLP based projection system seems almost inevitable from energy efficiency and color sequential mode of operation as common standard for such systems. The use of PCW may help a lot in the issue of distribution the energy of laser source over larger surface of luminescent material and reducing power density dramatically.

Hence, because of the etendue, the solid state light source beam, especially the laser beam, on the luminescent material should preferably be focused. Further, in view of the projection on the image panel, especially the DLP, the solid state light source beam should preferably also be homogenous. Hence, it is an aspect of the invention to provide an alternative projection system, which preferably further at least partly obviates one or more of above-described drawbacks.

A solution proposed involves a pre-shaped (laser) beam, instead of for instance focusing the laser beam in typically round shape and the try to homogenize emission by a light rod or tunnel (see for instance US2006152689 or CPC (compound parabolic connector)). The laser beam can be pre-shaped (relatively easy) into a homogeneous rectangular form, for example. Emission (luminescence) from such excitation spot appears to be substantially rectangular as well.

The rest to be done is just to magnify the image of the luminescent material emitter and deliver it with proper angular properties towards the panel, especially the DLP panel. This can be achieved using a (reflective) collector. The reflector collects light emitted by luminescent material located on PCW (preferably a ring shaped PCW to allow light to pass through) and produce the image of the emitter onto the DLP panel (or 3LCD image panel). Optionally, additional optics may be applied.

Hence, the arrangement with pre-shaped (laser) excitation spot may reduce the total number of optical, mechanical elements in projection system, which is consequently reduces the cost of entire system. It can also be easily adopted with minimum changes in current architectures of projection systems by the customers.

Therefore, in a first aspect, the invention provides a projection system comprising a projection light source and a color wheel, wherein the projection light source comprises a solid state light source, especially a laser diode, configured to generate a solid state light source beam (especially a laser beam) having a solid state light source beam cross-section, and wherein upstream of color wheel beam shaping optics are arranged, configured to shape the solid state light source beam cross-section into a rectangular cross-section.

Herein, the term "solid state light source" may especially relate to a LED or to a laser diode. The term "solid state light source" may in an embodiment also refer to a plurality of solid state light sources. A plurality of solid state light sources may include different types of solid state light sources, such as a combination of a laser diode and a LED. In a specific embodiment, the solid state light source comprises a laser diode.

The term "image panel" especially refers to a DLP unit (comprising a DLP panel) or a 3LCD unit (comprising 3 LCD panels). Another term for an image panel is for instance spatial light modulator, which may include (3)LCD, DLP, LCOS, and SXRD. The terms "upstream" and "downstream" relate to an arrangement of items or features relative to the propagation of the light from a light generating means (here the solid state light source), wherein relative to a first position within a beam of light from the light generating means, a second position in the beam of light closer to the light generating means is "upstream", and a third position within the beam of light further away from the light generating means is "downstream".

The beam shaping optics may in an embodiment comprise a fly eye integrator. In a further embodiment, the beam shaping optics comprises a diffractive optical element (DOE). In another embodiment, the beam shaping optics comprises an optical apparatus as described in W09518984, which is incorporated herein by reference.

Especially, the color wheel comprises a luminescent material, excitable by the solid state light source beam and configured to generate, upon excitation by the solid state light source beam, visible light. This visible light is then used for projection on the image panel.

Such color wheel is for instance described in W02007141688, which is incorporated herein by reference. For instance, the color wheel may be a color conversion unit for converting blue or ultraviolet light into visible light comprising at least two sections at least one section of which being a transparent or translucent color converting section, said color conversion unit being arranged for alternately illuminating said at least two sections with said blue or ultraviolet light, said at least one color converting section containing luminescent material, wherein preferably said luminescent material is a luminescent organic dye in a polymer matrix or a crystalline inorganic luminescent material. Especially, the color conversion unit may be designed as a rotational oscillator to be rotated with a rotational frequency. More especially, the rotational oscillator is a color wheel to be rotated with a rotational frequency comprising at least two sections, at least one of which being a transparent or translucent color converting section. In an embodiment, the color wheel comprises at least four sections to perform more than one color cycle per revolution.

In an embodiment, the luminescent material is comprised in a ceramic body. For instance, the color wheel may include ceramic parts. Further, the color wheel preferably comprises heat sink material. For instance, the color wheel may comprise heat sink parts, in physical contact with the luminescent material (especially luminescent ceramic). Ceramic bodies for luminescent materials are known in the art. It is for instance referred to U.S. patent application Ser. No. 10/861,172 (US2005/0269582), to U.S. patent application Ser. No. 11/080,801 (US2006/0202105), or to WO2006/097868, to WO2007/080555, to US2007/0126017 and to W02006/114726. The documents, and especially the information about the preparation of the ceramic layers provided in these documents, are herein incorporated by reference.

Preferably, the color wheel is in the form of a ring (with luminescent material on at least part of the "rim"), in order to reduce blocking of light reflected by the collector (see also below) for projection on the image panel. Alternatively, the wheel may be in form of a disk, with at least part of the disk being transparent. A specific embodiment of the color wheel is also suggested herein.

The emission created by the rectangular solid state light source beam can be projected on the image panel, especially a DLP panel. Therefore, especially a collector may be applied, which collects the luminescence (light) from the luminescent material. This collected visible light is then used for projection on the image panel.

Hence, in a preferred embodiment, the projection system further comprises a collector, especially a reflective collector, arranged downstream of the color wheel, and configured to collect the visible light from the luminescent material and configured to reflect the visible light in the direction of the image panel, such as a digital light processing (DLP) panel (as beam of light). In an embodiment, the collector may be configured to allow the solid state light source beam pass through the collector to excite the luminescent material, and be configured to collect the visible light. The collector may comprises a first end (bottom) (herein also indicated as "first collector end") and a second end (collector opening), oppositely arrange thereof. The collector may be configured to allow the solid state light source beam pass through the collector to excite the luminescent material, and be configured to collect the visible light. In an embodiment, this may be achieved by an open first end. Hence, solid state light source light travels through the opening in the first end in the direction of the collector opening and illuminates the luminescent material; luminescence thereof enters the collector via the collector opening and is collected and reflected (in the direction of for instance the DLP). The collector may have a cross section at the collector opening, which is larger than the cross section of the collector at the first end; especially, this may be a concave collector (with open first end).

Concave collectors are known in the art (see for instance WO2010032180 (in this document, the first end comprises at least part of the light source and the second end comprises a transparent plate)). The collector (especially reflective collector) may have a spherical, parabolic, elliptical, or polynomial concave shape.

An advantage of the projection system of the invention may be that conventional optics downstream of the color wheel and upstream of the image panel (especially DLP) may not be necessary anymore.

As indicated above, the pre-shaped solid state light source beam is especially of interest for a luminescent material comprising color wheel and within the DLP concept. Hence, especially, the projection system is a digital light processing (DLP) based system. Hence, the above described embodiments, which are especially suitable for DLP-based projection systems, may relatively be easy to manufacture and may provide a cost-effective solution. Further, the embodiments may be applied as retro-solution or retro-application, i.e. that a conventional light source and optionally optics may be replaced with the embodiments of the invention.

Optionally, for other applications, such as for instance for entertainment projection systems, the beam shaping optics may be configured to shape the solid state light source beam cross section into other shapes, such as a star-shape, a circular shape, or any other desirable shape.

A disadvantage of prior art systems may be their intensity, or the inflexibility of the systems to boost the intensity. This may especially be a problem for 3LCD systems (i.e. 3LCD-based systems). An arrayed static design for a 3LCD-based projection system may have a lot of advantages, but still seems to lack extendibility to high brightness projection system with screen brightness performance over 3000 Lumens.

Hence, now a new projection system is proposed, with integrated laser pumped luminescent light source, which may create a constant-on white light source which is especially needed for 3LCD systems. Further, it may enable brightness scaling for 3LCD systems. Further, it may allow a dramatic reduction in thermal loads for luminescent material due to its dynamic energy distribution over the large surface (of the luminescent material). In addition, it may flexibly be upgraded, modified, scaled up or down with little/no changes in primary architecture of the light source. Further, in case of customized designs many parameters can be flexibly adjusted. Beyond that, an easy rearrangement of collection optics may be able to turn white light source into a three-color source (in case application does not require color mixing, or requires alternative colors).

Hence, in a further aspect, the invention provides a projection system comprising a projection light source and a color wheel, wherein the projection light source comprises a solid state light source, such as a laser diode, configured to generate a solid state light source beam, wherein the color wheel comprises at least two regions with luminescent material configured to generate, upon excitation by the solid state light source beam, visible light at different emission wavelengths, and wherein the regions are arranged at different distances from an axis of rotation of the color wheel. In this way, a flexible arrangement of the optics may be possible. Further, the mean time an area of luminescent material that is illuminated by the solid state light source light may be reduced, thereby saving the lifetime and properties of the luminescent material. The visible light from the luminescent material may then be used for projection on the image panel.

In a specific embodiment, in the order of increasing Stokes shift the luminescent materials are arranged at increasing distances from the axis of rotation. Hence, the thermal most challenged luminescent material is arranged at the largest distance. This may imply that this luminescent material is illuminated by the solid state light source light relatively less, i.e. the time a specific area is illuminated may be shorter than in prior art systems, and may at least be shorter for the luminescent material(s) having a smaller Stokes-shift. The term Stokes-shift relates to the difference in excitation wavelength (energy) and emission wavelength (energy).

In an embodiment, downstream of the color wheel a collector (see also above) is arranged, configured to allow transmission of the solid state light source beam and to collect visible light from the luminescent material. This collected visible light is then used for projection on the image panel.

More precisely, for each region, a collector may be provided. Hence, downstream of the color wheel collectors may be arranged, configured to allow transmission of the solid state light source beams and to collect visible light from the luminescent materials (in the different regions), respectively. For instance, the collector(s) may be reflective collector(s).

Such collector(s) may thus be arranged downstream of the color wheel, and configured to collect the visible light from the luminescent material and configured to reflect the visible light in the direction of the image panel, such as a digital light processing (DLP) panel. For instance, the collector may be configured to allow the solid state light source beam pass through the collector (from the collector opening to the first end, which is open) to excite the luminescent material, and be configured to collect the visible light. Concave collectors are known in the art, and are for instance described in WO2010032180. The collector (especially reflective collector) may have a spherical, parabolic or elliptical shape. Alternatively or additionally, the collector(s) may comprise a CPC('s) (i.e. compound parabolic concentrator), such as for instance described in WO2007102940, WO2009070435, or US2004131157 (see also below), which are herein incorporated by reference. Such CPC is especially arranged to concentrate the light beam to have bright illumination, uniform light field, and sharp edge contrast. In an embodiment, the CPC may have polynomial aberrations.

When using a blue emitting solid state light source, at least part of the luminescent material may be replaced by a reflective material, i.e. especially in these embodiments, the color wheel may also comprise reflective material. Hence, in such embodiment the collector may be configured to allow the solid state light source beam pass through the collector (from the collector opening to the first end, which is open) to illuminate the reflective material, and be configured to collect the reflected light. Especially, the reflective material is a Lambertian reflector.

Since the collector may be configured to allow transmission of the solid state light source beam to the luminescent material, in fact the collector is with respect to the solid state light source light upstream of the color wheel, whereas with respect to the collection of luminescence (visible emission of the luminescent material), the collector is arranged downstream of the color wheel. Since the function of the collector is especially collection of luminescence, the collector is considered to be arranged in these embodiments downstream of the color wheel. The edge of collector ( especially the reflective collector), is arranged at a non-zero distance from the color wheel. Preferably, the distance is in the range of 0.05 to 10 mm, especially 0.1 to 5 mm.

In a specific embodiment, the projection system comprises optics, configured to split the solid state light source beam upstream from the at least two regions (preferably three regions (RGB)) into at least two solid state light source beams (preferably at least three) and configured to address the at least two regions (preferably at least three (RGB)). For instance, that optics may comprise a plate arranged and configured to be partly transmissive for the solid state light source light and being partly reflective to the solid state light source light. This may for instance depend upon the material and/or the angle with respect to the solid state light source beam.

In a further embodiment, the projection system comprises optics configured to combine the visible light of the at least two regions into a single beam. For instance, this single beam may be directed to a 3LCD unit. Hence, in a specific embodiment, the projection system is a 3LCD based system. In a further embodiment, the projection system comprises optics configured to direct the (uncombined) collected visible light from the luminescent materials to the 3LCD unit, i.e. to the three LCD's of the 3LCD unit, respectively.

In yet another embodiment, the projection system is a digital light processing (DLP) based system.

In a further aspect, the invention provides the color wheel per se, comprising at least two regions with luminescent material configured to generate, upon excitation by a solid state light source beam, visible light at different emission wavelengths (i.e. the regions provide emissions with different wavelength distributions), and wherein the regions are arranged at different distances from an axis of rotation of the color wheel, wherein in the order of increasing Stokes shift the luminescent materials are arranged at increasing distances from the axis of rotation. Especially, in the order of increasing Stokes shift the luminescent materials are arranged at increasing distances from the axis of rotation. Alternatively the luminescent materials may be arranged at increasing distances from the axis of rotation in order of increasing price of the luminescent material, or in order of decreasing temperature resistance.

In a preferred embodiment, the color wheel comprises three regions with RGB (red, green, blue) luminescent materials, respectively. However, the color wheel may comprise more than three regions with at least three colors. In a specific embodiment, one or more luminescent materials are comprised in a ceramic body. An advantage of using ceramic bodies may be that thermal energy may more easily be dispatched. In an embodiment, the luminescent material is comprised by a heat sink material. For instance, the color wheel may be a heat sink or comprise heat sink material.

In a specific embodiment, part of the color wheel may be transmissive. In a further embodiment, especially wherein a blue solid state light source is applied, part of the color wheel, instead of luminescent material, white reflective material may be applied (reflective for the solid state light source light). The color wheel may for instance comprise a (upon UV excitation) blue luminescent material, a (upon UV excitation) green luminescent material, and a (upon UV excitation) red luminescent material, respectively. In another embodiment, the color wheel may comprise a (upon blue light illumination) blue light reflective material, a (upon blue excitation) green luminescent material, and a (upon blue excitation) red luminescent material, respectively.

Hence, in embodiments wherein a blue emitting solid state light source is applied, the term RGB luminescent material may, where applicable, also relate to RG luminescent materials (i.e. red and green luminescent materials) and a B reflective material (i.e. a blue light reflective material). Reflective materials that may for instance be applied can for example be selected from the group consisting of BaSO₄, MgO and Al₂O₃.

Especially these embodiments, more especially in relation to a 3LCD system, high brightness may be achieved, enabling solution for 3LCD-based projection system (>3000LM). Further, a cost effective solution may be provided. Beyond that, existing systems may be easy to upgrade (retro application), modify, and scale. Further, the embodiments may provide long-life time due to drastically reduced thermal loads on luminescent material. The solution may provide compactness. The embodiments allow combination into white light but also separation into two or more, especially three, separate colors. Hence, in a specific embodiment, a 3LCD system is suggested, comprising a color wheel as defined above.

Light emission from luminescent material has to be properly managed in order to efficiently deliver it to the image panel, such as the DLP or 3LCD unit. Light emission from the emission spot on the luminescent material is preferably projected into a homogeneous rectangular spot having the size of the DLP panel of the DLP unit or LCD panel(s) of the 3LCD unit. In standard projection configuration utilizing UHP lamps, this is achieved by several optical components, e.g. light-tunnel, lenses and mirrors.

Another option to homogenize light from the luminescent materials and to project on the 3LCD unit or DLP unit is herein suggested. Here, an optical component enabling remote location of initial source and color converting material (luminescent material, luminescent ceramic, etc.), while using all benefits of a single component for collection and homogenization of light emitted from luminescent material, is suggested. Alternatively, the optical component may be combined with a color wheel, especially for DLP.

Hence, in a further aspect, the invention provides a projection system comprising a projection light source, optics, and a luminescent material, wherein the projection light source comprises a solid state light source configured to generate a solid state light source beam, wherein the luminescent material is configured to generate, upon excitation by the solid state light source beam, visible light, wherein the optics comprises a collector, and wherein the collector is configured to allow the solid state light source beam pass through the collector to excite the luminescent material and configured to homogenize the visible light emitted by the luminescent material for projection on the image panel. Hence, at one end of the collector, solid state light source light is introduced, and travels to another end of the collector, where luminescent material is arranged. Emission is collected and homogenized, and leaves the collector again at the same end where the solid state light source light was introduced into the collector. The collected visible light is used for projection on the image panel.

In a specific embodiment, the collector is a reflective homogenizer, preferably a compound parabolic concentrator (CPC) (see also above for specific references). In an embodiment, the CPC may have polynomial aberrations.

In an embodiment, also indicated above, the luminescent material is comprised by a heat sink material. In a specific embodiment, the heat sink material and the collector are an integrated unit. Such unit is herein also called "reflective and color converting homogenizer" (RCCH). Hence, in a further aspect, the invention also provides a compound parabolic concentrator, comprising luminescent material arranged at a first end (bottom) (herein also indicated as "first collector end") of the compound parabolic concentrator, opposite of the second end (collector opening). The collector (itself) may comprise heat sink material (such as a thermal conductive body). Hence, the collector may comprise heat sink material, facilitating dissipation of thermal energy.

Hence, in a specific embodiment, the projection system comprises three collectors with different luminescent materials, and further comprises optics configured to direct the (uncombined) collected light from the three collectors to the image panel, such as a 3LCD unit, i.e. to the three LCD's of the LCD unit. This may especially be applied when the solid state light source is configured to generate UV light.

The collectors may for instance comprise a (upon UV excitation) blue luminescent material, a (upon UV excitation) green luminescent material, and a (upon UV excitation) red luminescent material, respectively. In another embodiment, the collectors may comprise a (upon blue light illumination) blue light reflective material, a (upon blue excitation) green luminescent material, and a (upon blue excitation) red luminescent material, respectively. In the former embodiment, three RCCH's are applied, in the latter two RCCH's and one reflective homogenizer are applied.

In an embodiment, the luminescent material is not comprised by the collector, but slightly remote thereof (i.e. just behind the first end, which is open in such an embodiment). This may for instance enable this embodiment in combination with a color wheel. Hence, in a further embodiment, the luminescent material is comprised by a color wheel and the collector (especially reflective homogenizer) is arranged at a non-zero distance from the color wheel (see also above).

The color wheel may for instance comprise a (upon UV excitation) blue luminescent material, a (upon UV excitation) green luminescent material, and a (upon UV excitation) red luminescent material, respectively. In another embodiment, the color wheel may comprise a (upon blue light illumination) blue light reflective material, a (upon blue excitation) green luminescent material, and a (upon blue excitation) red luminescent material, respectively. A specific embodiment of the color wheel is also suggested herein.

In an embodiment, the projection system is a 3LCD based system. In yet another embodiment, the projection system is a digital light processing (DLP) based system.

Such innovative component as RCCH may have a lot of advantages as combining and enabling of usage of different light sources for excitation of luminescent material and converting initial color into a desired one, effective collection of emitted light, homogenization of light distribution and creating right (needed) shape of spot (rectangular, square, circular, elliptical exit apertures). Beside the above mentioned advantages making the RCCH as solid single body component out of highly thermal conductive material (e.g. Al, ALN, Cu, Silver, Gold, etc.), may effectively remove heat loads from the luminescent material enabling creation of very bright light sources. The collector unit (RCCH) may be very compact and may for instance have dimensions of about 5-10 x 5-10 x 20-40 mm depending on required output.

The challenges encountered while developing laser pumped luminescent sources for projection specifics especially lies in efficient, adaptable and cost effective integration of multiple light emitters with projection optical systems. Here, a solution is proposed which can be considered a platform for creation of integrated laser pumped luminescent light sources, which may easily be integrated in current designs of projection system both 3LCD and DLP based (especially 3LCD), may have a higher thermal stability and associated life-time, may be cost effective, may flexibly be upgraded, modified, scaled up or down with little/no changes in primary architecture of light source, and in case of customized designs many parameters can be flexibly adjusted.

Hence, in a further aspect, the invention provides a projection system comprising a projection light source unit and an image panel, especially a 3LCD unit, wherein the projection light source unit comprises:
a. a plurality of solid state light sources, especially a plurality of laser diodes, each configured to generate a solid state light source beam,
b. a plurality of collectors, each having a first end and an opposite second opening (collector opening),
c. distributors to distribute the solid state light source beams over the collectors and to direct the distributed solid state light source light beams through the second collector openings in the direction of the first ends,
d. luminescent material arranged at the first end, wherein the luminescent material is configured to generate, upon excitation by the solid state light source beam, visible light, and wherein the collector is configured to collect the visible light into an emission beam;
wherein the projection light source unit is further configured to provide the plurality of emission beams to the image panel, especially the 3LCD unit.

Such light source unit provides a plurality of emission beams from the plurality of collectors. Note that the number of solid state light sources may be smaller than the number of collectors, since the solid state light source light may be distributed over the collectors. In general, the number of distributors may be the same as the number of collectors.

In a specific embodiment, the projection system further comprises an integrator lens, configured to integrate the plurality of emission beams. For instance, this may be a second lens of a fly eye (homogenizer).

As mentioned above, in a specific embodiment, the luminescent material is comprised by a heat sink material. Further, the luminescent material may in an embodiment be comprised in a ceramic body.

In a specific embodiment, the projection system may comprise two or more sets of light source units, wherein each light source unit is configured to provide a plurality of emission beams to the corresponding LCD unit (of the 3LCD unit). Especially, the projection system may comprise three sets of light sources units, wherein the light source units are configured to provide RGB light, respectively. In this way, a 3LCD system may easily be provided.

Such architecture may have a high thermal stability since luminescent material plates and thermal loads for each piece distant from each other and located on effective passive heat sink material (experimental data shows availability to focus 200mW laser beam into spot of 50µm while having 100 °C temperature in the spot). Laser diodes used for integration are commonly and widely available. Laser diodes are often mounted in specially designed heat sink material which allows minimizing thermal influence on each other and ensuring good working stability. Flexibility in product parameters e.g. improved color performance, brightness etc. could achieved by removing one channel of luminescent material plates and placing partially scattering mini-mirror and use direct laser source for integration.

Again, these embodiments, may rather easy to manufacture and may be a cost effective solution. Further, it may be an easy to upgrade (retro application), modify, and scale.

In an embodiment, the solid state light sources indicated herein are configured to generate UV light. In such instance, the luminescent materials may especially comprise RGB luminescent materials. In another embodiment, the solid state light sources indicated herein are configured to generate blue light. In such instance, the luminescent material may especially comprise RG luminescent materials. When the LEDs are configured to generate blue light, in some embodiments, part of the luminescent material(s) may be replaced by reflective material(s) (reflective for solid state light source light) (see also above).

The term solid state light source especially relates to a light emitting diode (LED) or to a laser diode. As mentioned above, they are especially configured to generate UV or blue light.

The term "substantially" herein, such as in "substantially all emission" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figures 1a-1c schematically depict a projection system based on DLP technology, a version of a color wheel, and a projection system based and on 3LCD technology, respectively;
Figures 2a-2e (schematically) depict some embodiments and results in relation to a pre-shaped solid state light source beam;
Figures 3a-3d schematically depict some embodiments of a color wheel with luminescent material arranged at different distances from a rotation axis;
Figures 4a-4c schematically depict some embodiments of a specific collector unit, especially a CPC;
Figures 5a-5d schematically depict some embodiments of the projection light source unit and its application.

### DESCRIPTION OF PREFERRED EMBODIMENTS

In general, there are two types of projection systems, DLP-based and 3LCD-based. The projection system is indicated with reference 100.

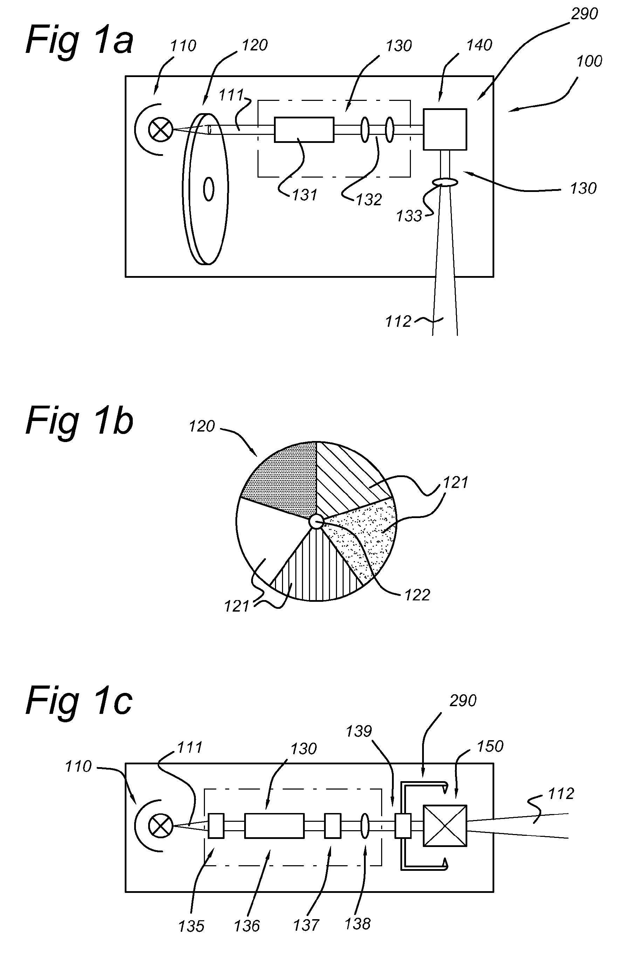

Figure 1a schematically depicts a DLP-based projection system 100, which comprises here a light source (UHP-based) 110, generating a beam of light 111, downstream thereof a color wheel 120, downstream thereof optics 130, which in general comprises a homogenizer 131, such as a light tunnel, integrating rod or fly eye, and one or more lenses or mirrors 132. Downstream thereof, a DLP unit 140, as example of a image panel 290, is arranged. Downstream thereof, again some optics may be found, such as one or more lenses 133. The projection system 100 provides projection beam 112.

Figure 1b schematically depicts a version of a color wheel 120, with color filters 121. The color wheel may comprise one or more of those filters, but may also comprise a colorless transparent part. Here, the wheel has a disk-like shape.

Figure 1c schematically depicts a 3LCD-based version of a projection system 100, with main differences that the DLP-unit is replaced by a 3LCD unit 150, as another example of an image panel 290, and that the optics 130, upstream thereof, may comprise for instance a negative lens 135, arranged downstream of the light source 110, downstream thereof a homogenizer 136 (such as a fly eye integrator), downstream thereof a polarizer 137, downstream thereof one or more lenses 138, and downstream thereof a splitter 139, arranged to split the beam of light 111 into three beams of different colors.

Below, embodiments of the invention are depicted, wherein light source 110 comprises a solid state light source, such as a laser diode, indicated with reference 115, beam of light 111 is a solid state light source beam (or at any rate a beam of light generated by the solid state light source based light source 115, and the color wheel 120, if available, comprises luminescent material, such as luminescent ceramics.

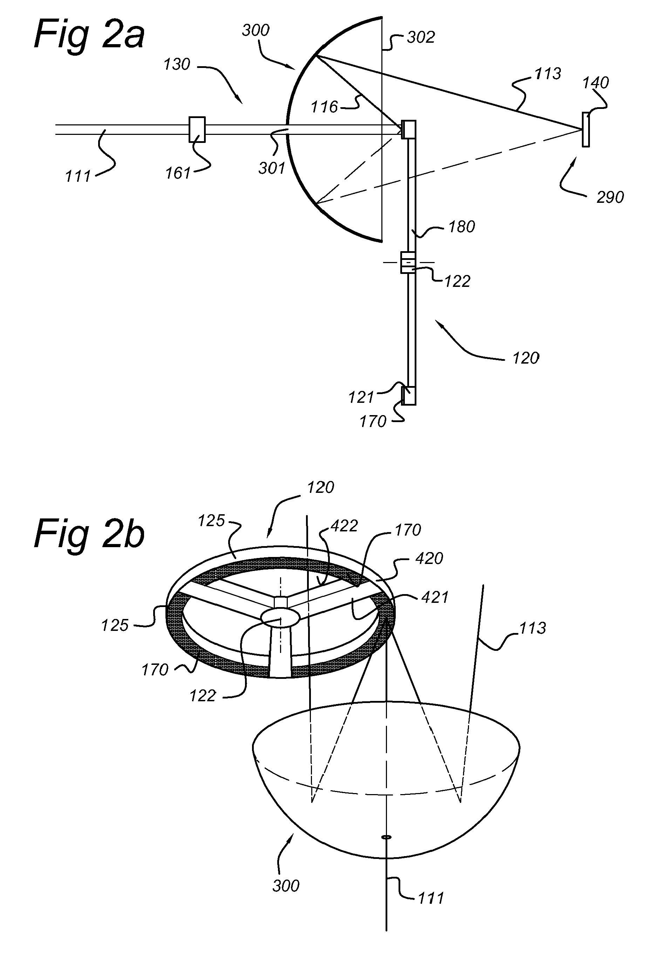

Figure 2a schematically depicts an embodiment, wherein downstream of color wheel 120 beam shaping optics 161 are arranged, configured to shape the solid state light source beam cross-section into a rectangular cross-section. Color wheel 120 comprises a luminescent material 170 (especially as ceramic), excitable by the solid state light source beam 111 and configured to generate, upon excitation by the solid state light source beam 111, visible light 116. The beam shaping optics 161 may for instance comprise a fly eye integrator or a diffractive optical element.

Downstream of the color wheel 120, a collector 300, especially a reflective collector, is arranged downstream. The collector 300 is configured to collect the visible light 116 from the luminescent material 170 and configured to reflect the visible light (as beam 113) in the direction of the image panel 290, such as the digital light processing DLP 140 (as depicted).

Here, the collector is open at a first end 301, to allow the solid state light source beam 111 illuminate the luminescent material 170. Therefore, this collector 300 may also be considered arranged upstream of the color wheel 120 (since the solid state light source beam travels from the first end 301 to the second end 302).

The color wheel 120 has an axis of rotation 122. Further, the color wheel 120 may comprise heat sink material 180, especially to dissipate heat from the luminescent material. Figure 2b schematically depicts the same embodiment as figure 2a, but now in another view. The color wheel 120 comprises a plurality of regions (sometimes also indicated as sections) 125 with luminescent material 170. The luminescent materials 170 may have different characteristics. For instance, the color wheel 120 may comprise RGB luminescent materials. Here, the color wheel 120 is a specific embodiment having a ring shape. The ringshaped embodiment of the color wheel 120 has a "rim" 420 with "spoke" 420. Further, this embodiment comprises one or more wheel openings 422. Hence, a specific embodiment of the color wheel 120 comprises one or more openings 422, which may especially be configured to allow (part of) beam (113) pass through. This is also schematically depicted in figures 2a-2b. As will be clear to the person skilled in the art, other shapes of the color wheel 120 with one or more openings 422 configured to allow (part of) beam (113) pass through may also be conceivable.

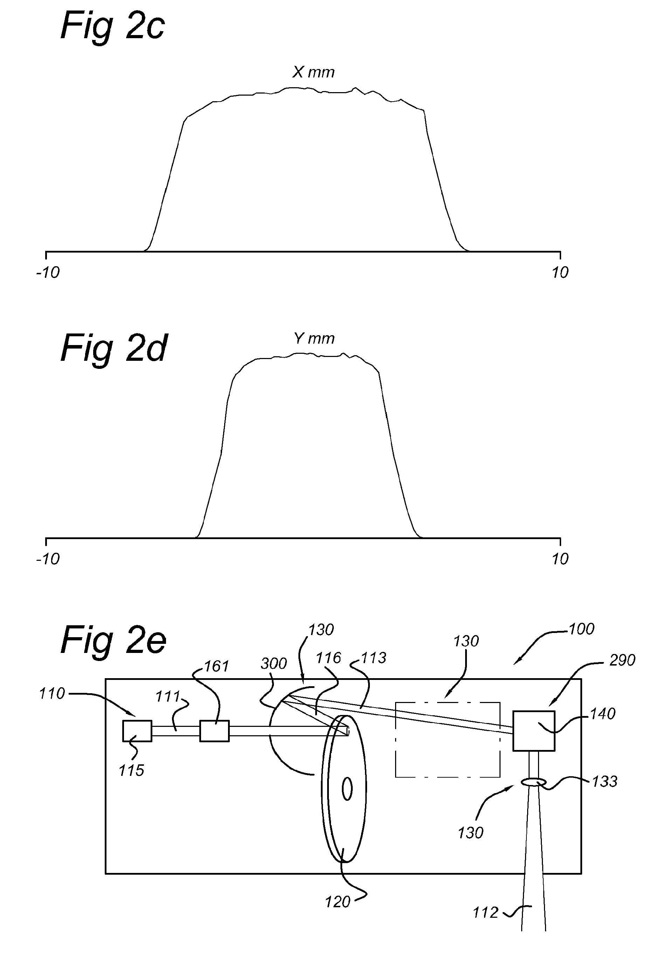

Figures 2c and 2d show the homogeneity of the on the DLP unit 140 displayed beam (along x-axis and along y-axis, respectively).

Figure 2e schematically depicts an embodiment wherein the beam shaping optics 161 are incorporated in the projection system 100, here preferably a DLP based system. The introduction of the beam shaping optics 161 and the collector 300, may lead to a reduction or complete removal of conventional optics 130 between the color wheel 120 and DLP unit 140.

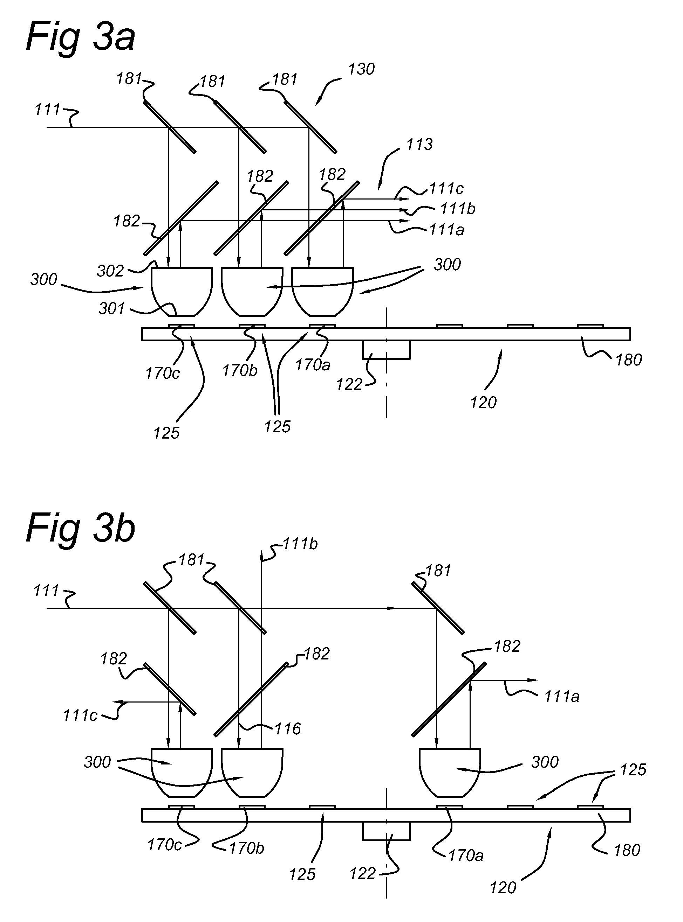

Figures 3a-3c schematically show embodiments of the color wheel 120, wherein the color wheel 120 comprises at least two regions 125 with (preferably different) luminescent materials 170 configured to generate, upon excitation by the solid state light source beam 111, visible light at different emission wavelengths. The regions 125 are arranged at different distances from the axis of rotation 122. Assuming different type of luminescent materials 170, the regions 125 are preferably arranged in the order of increasing

Stokes shift the luminescent materials 170 with at increasing distances from the axis of rotation 122 luminescent materials with increasing Stokes shift. For instance, close to the axis of rotation 122 blue luminescent material, further away green luminescent material, and even further way red luminescent material.

The luminescent material(s) 170 may be comprised in ceramic bodies. Further, the color wheel 120 may comprise heat sink material 180.

Downstream of the color wheel 120 collectors 300 are arranged, configured to allow transmission of the solid state light source beam 111 and to collect visible light from the luminescent materials 170, respectively. The collector 300 may comprise a compound parabolic concentrator (CPC) 190 (see also below), or a lens or a combination of a reflector and lens. In these embodiments, the collect optics are open at the first end 301, to allow solid state light source beam 111 illuminate the luminescent material 170. The collector 300 is arranged at a non-zero distance of the color wheel 120. In this way, the color wheel 120 may rotate (along axis 120).

Further, optics 181 configured to split the solid state light source beam 111 are arranged upstream from the regions 125 to split the solid state light source beam into at least two solid state light source beams 111. In this way, the regions 125 can be addressed. The optics 181 may for instance comprise a glass plate, arranged under an appropriate angle to allow reflection of part of the solid state light source beam 111 and transmission of part of the solid state light source beam 111. As can be seen from the drawings, with respect to the luminescence, the collector 300 is arranged downstream from the color wheel 120; with respect to the excitation (by the solid state light source beam 111), the collector 300 is in fact arranged upstream of the color wheel 120.

Further, optics 182 configured to combine the visible light of the regions 125 into a single beam, as schematically depicted in figure 3a. Again, the optics 182 may for instance comprise a glass plate, arranged under an appropriate angle to allow reflection of the collected emission downstream from the collector 300 and transmission of the solid state light source beam 111. Figure 3b schematically depicts an embodiment wherein the different emission may be kept separated. This may be advantageous in an embodiment of the 3LCD-based projection system. For instance, the differently colored emissions may be directed directly to the LCD's of the 3LCD unit.

For instance, part of the luminescent material 170 may be replaced by a reflective material, especially when the solid state light source 115 is configured to generate blue light. Here, referring to the regions 125 comprising luminescent materials 170a, 170b, and 170c, respectively, for instance instead of luminescent material 170a (smallest radius), reflective material may be applied. The other two regions 125 may comprise luminescent material 170b, such as a green emitting luminescent material, and luminescent material 170c, such as a red emitting luminescent material.

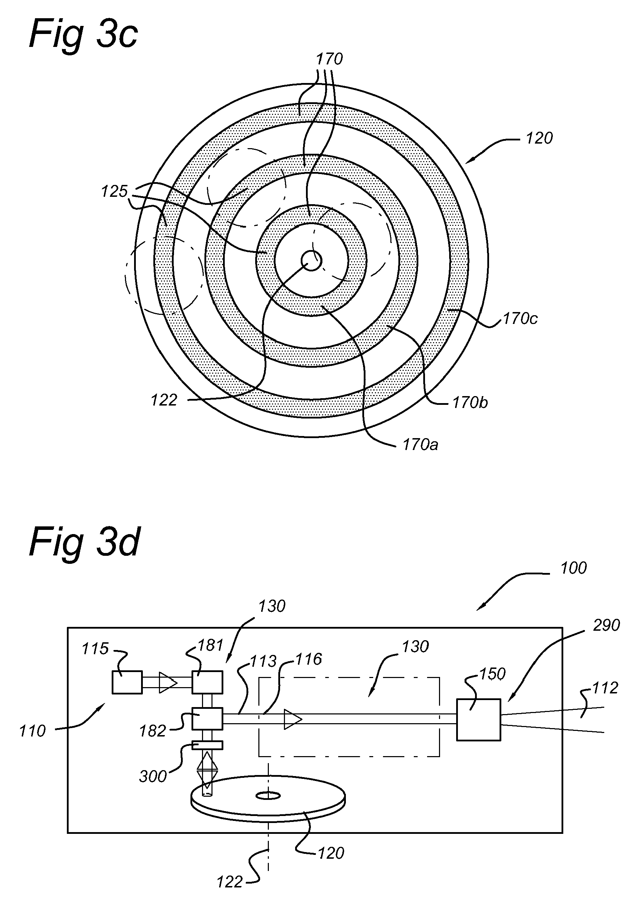

In figure 3c, the regions 125 are in the form of rings. However, the rings are not necessarily closed rings. For instance, the regions 125 may also be arranged as plurality of ring-like arranged regions.

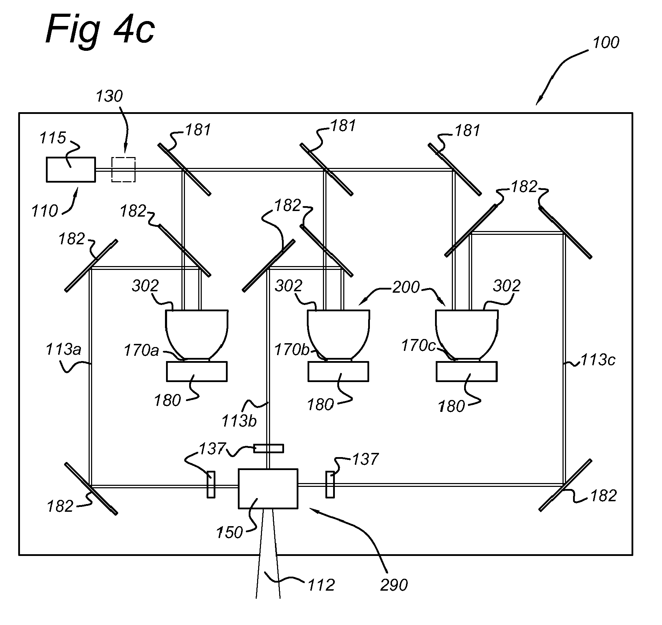

Figure 3d schematically depicts an embodiment wherein the color wheel 120 and collector 300 are incorporated in the projection system 100, here preferably a 3LCD based system. The introduction of the color wheel 120 and collector 300, may lead to a reduction or complete removal of conventional optics 130 between the light source and 3LCD unit 150. A variant on this figure is schematically depicted in figure 4c.

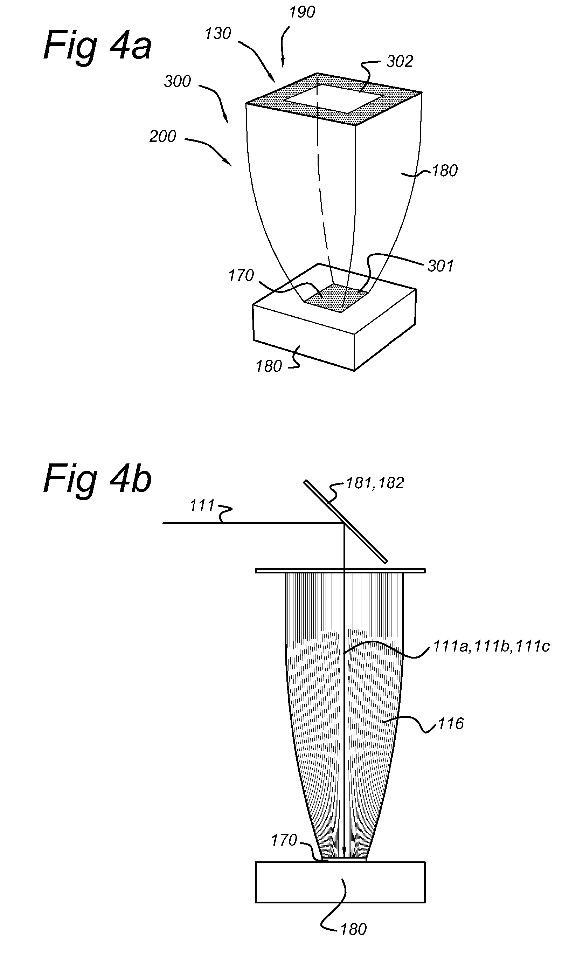

Figure 4a schematically depicts an embodiment of a collector 300, preferably a reflective homogenizer such as a compound parabolic concentrator 190, comprising luminescent material 170 arranged at a first end 301 of the compound parabolic concentrator opposite of the collector opening 302 (here preferably a rectangular opening, although opening 302 may also be square, circular or elliptical, etc.) of the collector 300. The luminescent material 170 may be integrated in a single unit, or may be part of a color wheel (not depicted here, but see for instance figures 3a-3d). In the latter embodiment, the luminescent material 170 is comprised by the color wheel 120 and the collector 300 is arranged at a non-zero distance from the color wheel 120. In the embodiment schematically depicted in figure 4a, the luminescent material 170 is comprised by heat sink material (180), and the heat sink (material) 180 and the collector 300 are an integrated unit 200. Hence, in this embodiment, the collector 300 is not fully transmissive with a second opening at the first end 301; here, the first end 301 is closed and comprises luminescent material 170. Figure 4b schematically depicts the principle of working of such reflective and color converting homogenizer (single unit of luminescent material integrated in first collector end 301). Multiple lines show rays emitted from the luminescent material 170 and its propagating paths within the body of the collector 300. Note that the collector opening 302 may be square, rectangular, elliptical, circular, etc., but is preferably for this application (see also figure 4c) rectangular.

Figure 4c shows an embodiment of an integration in the projection system 100, here 3LCD based. The projection system 100 comprising projection light source (one or more solid state light sources 115), optics 130 and luminescent material 170. The optics 130 comprises collector 300. Here, three collectors 300 are depicted, each to address a LCD of the 3LCD. Here, integrated units 200 are applied. However, also a color wheel option as for instance schematically depicted in figures 3a-3c might be applied. Hence, the specific collector 300, here the CPC 190, may be applied for both a 3LCD based system and a digital light processing (DLP) based system.

Part of the luminescent material 170 may be replaced by a reflective material, especially when the solid state light source 115 is configured to generate blue light. Here, referring to the luminescent materials 170a, 170b, and 170c, respectively, for instance instead of luminescent material 170a, reflective material may be applied. The other collectors 300 may be devoted to collect luminescence of luminescent material 170b, such as a green emitting luminescent material, and luminescent material 170c, such as a red emitting luminescent material, respectively.

A variant on figure 4c is figure 3d (in combination with one or more embodiments schematically depicted in figures 3a-3c): the luminescent materials are not integrated in the collectors 300, but are integrated in a color wheel (see for instance figures 3a-3c). In such embodiment, the collectors 300 are arranged at a non-zero distance from the color wheel

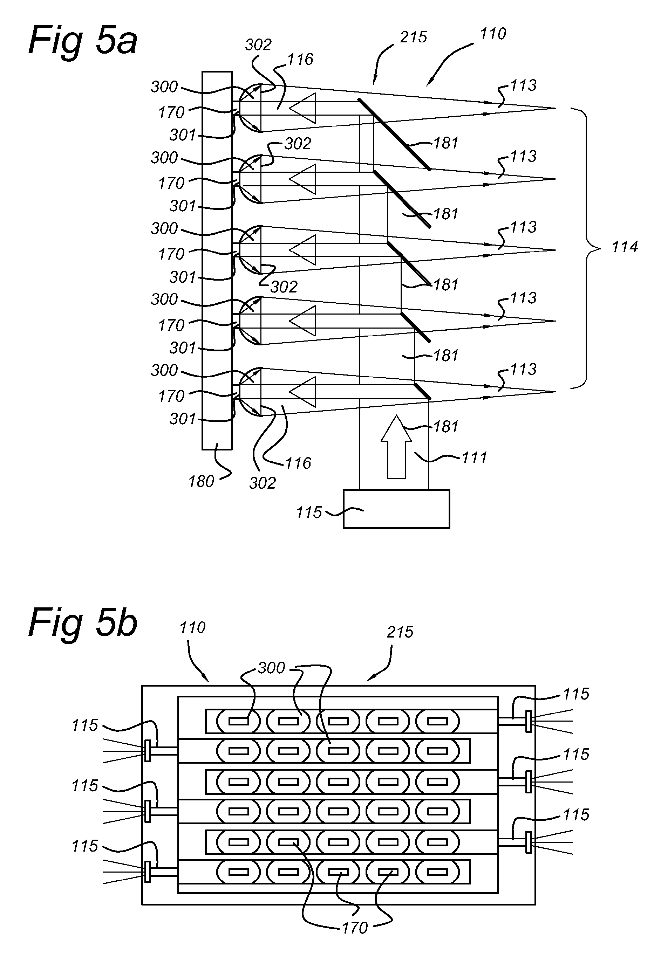

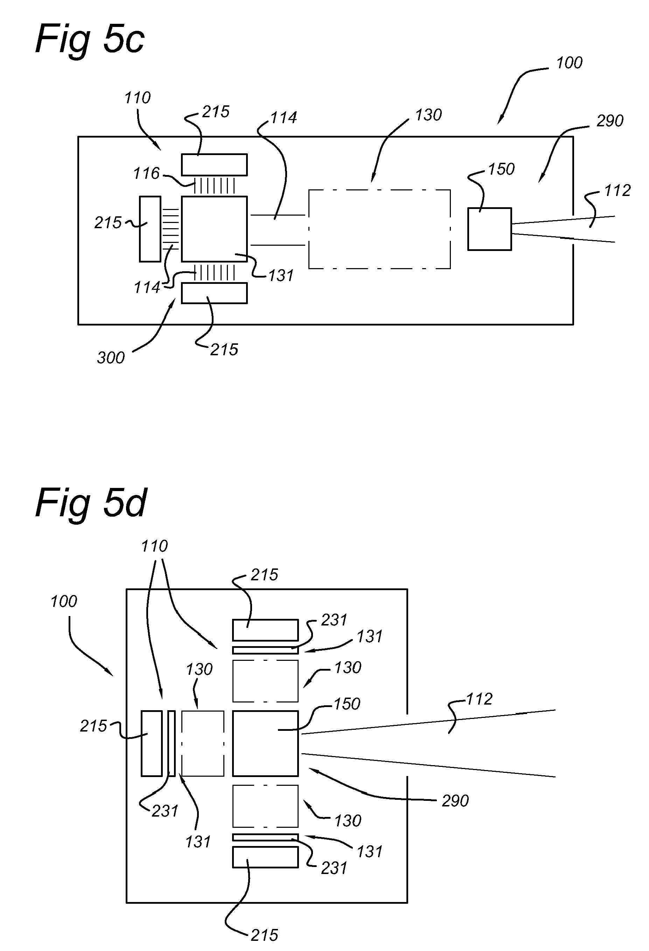

Figures 5a-5c schematically depict an embodiment of a light source unit 215 comprising a plurality of solid state light sources 115, each configured to generate a solid state light source beam 111; a plurality of collectors 300, each having a first end 301 and an opposite second opening 302; distributors 181 to distribute the solid state light source beams 111 over the collectors 300 and to direct the distributed solid state light source light beams through the second collector openings 302 in the direction of the first ends 301; and luminescent material 170 arranged at the first end 301, wherein the luminescent material 170 is configured to generate, upon excitation by the solid state light source beam 111, visible light, and wherein the collector 300 is configured to collect the visible light into an emission beam 113. In an embodiment, the collectors 300 comprise CPC collectors (as described above).

Figure 5c schematically depicts an implementation thereof in projection system, and depicts projection system 100 comprising projection light source unit 215 and the 3LCD unit 150, wherein the projection light source unit 215 is further configured to provide the plurality of emission beams 113 to the 3LCD unit 150.

Figure 5b schematically depicts an embodiment, comprising three sets of light sources unit (215), wherein the light source units (215) are configured to provide RGB light, respectively. Figure 5c schematically depicts an embodiment comprising two or more sets of light source units 215, wherein each light source unit 215 is configured to provide a plurality of emission beams 113 to the corresponding LCD unit of the 3LCD unit 150.

## Claims

1. A projection system (100) comprising a projection light source (110) and a color wheel (120), wherein the projection light source (110) comprises a solid state light source (115), configured to generate a solid state light source beam (111) having a solid state light source beam cross-section, wherein upstream of the color wheel (120) beam shaping optics (161) are arranged, configured to shape the solid state light source beam cross-section into a predefined shape, preferably rectangular shaped cross-section, and wherein the color wheel (120) comprises a luminescent material (170), excitable by the solid state light source beam (111) and configured to generate, upon excitation by the solid state light source beam (111), visible light (116) for projection on an image panel (290).

2. The projection system (100) according to claim 1, wherein the beam shaping optics (161) comprise a fly eye integrator or a diffractive optical element.

3. The projection system (100) according to any one of the preceding claims, wherein the solid state light source (115) is selected from the group consisting of a laser diode and a LED.

4. The projection system (100) according to any one of the preceding claims, wherein the luminescent material (170) is comprised in or on a ceramic body.

5. The projection system (100) according to any one of the preceding claims, wherein the projection system (100) further comprises a collector (300), especially a reflective collector, arranged downstream of the color wheel (120), and configured to collect the visible light (116) from the luminescent material (170) and configured to reflect the visible light (116) in the direction of the image panel (290), wherein the image panel (290) comprises a digital light processing (DLP) unit (140).

6. The projection system (100) according to any one of the preceding claims, wherein the color wheel (120) comprises at least two regions (125) with mutually different luminescent material (170) configured to generate mutually different spectra of visible light (116) upon excitation by the solid state light source beam (111), and wherein the regions (125) are arranged at different distances from an axis of rotation (122) of the color wheel (120), wherein preferably in the order of increasing Stokes shift the luminescent materials (170) are arranged at increasing distances from the axis of rotation (122).

7. The projection system (100) according to claim 6, wherein downstream of the color wheel (120) a collector (300) is arranged, configured to allow transmission of the solid state light source beam (111) and configured to collect visible light (116) from the luminescent material (170) for projection on an image panel (290).

8. The projection system (100) according to claim 7, wherein the collector (300) comprises a compound parabolic concentrator (CPC) (190).

9. The projection system (100) according to any one of claims 7-8, wherein the

10. The projection system (100) according to any one of claims 7-9, wherein the projection system (100) is a 3LCD based system.

11. The projection system (100) according to claim 10, comprising optics (182) configured to direct collected visible light (116) from the luminescent materials (170) to the 3LCD unit (150).

12. The projection system (100) according to any one of the preceding claims, wherein the solid state light source (115) is configured to generate blue light.

13. The projection system (100) according to any one of claims, comprising a projection light source unit (215) and a 3LCD unit (150), wherein the projection light source unit comprises:
a plurality of solid state light sources (115), each configured to generate a solid state light source beam (111),
a plurality of collectors (300), each having a first end (301) and an opposite second opening (302),
distributors (181) to distribute the solid state light source beams (111) over the collectors (300) and to direct the distributed solid state light source light beams through the second collector openings (302) in the direction of the first ends (301),
luminescent material (170) arranged at the first end (301), wherein the luminescent material (170) is configured to generate, upon excitation by the solid state light source beam (111), visible light (116), and wherein the collector (300) is configured to collect the visible light (116) into an emission beam (113);
wherein the projection light source unit (215) is further configured to provide the plurality of emission beams (113) to the 3LCD unit (150).

14. A color wheel (120) comprising at least two regions (125) with mutually different luminescent material (170) configured to generate mutually different spectra of visible light (116) upon excitation by the solid state light source beam (111), and wherein the regions (125) are arranged at different distances from an axis of rotation (122) of the color wheel (120), wherein in the order of increasing Stokes shift the luminescent materials (170) are arranged at increasing distances from the axis of rotation (122).

15. The color wheel according to any claims 14, wherein the color wheel (120) comprises three regions (125) with RGB luminescent materials (170), respectively, or wherein the color wheel (120) comprises two regions (125) with RG luminescent materials, respectively, and region (125) with reflective material.
